(19) Europäisches Patentamt
European Patent Office
Office européen des brevets

(11) Veröffentlichungsnummer: **0 278 267 B1**

(12) # EUROPÄISCHE PATENTSCHRIFT

(45) Veröffentlichungstag der Patentschrift: **07.08.91**

(51) Int. Cl.[5]: **C14C 3/22**, C14C 3/28, C08F 220/06, C08F 220/60, //(C08F220/06,220:60), (C08F220/60,220:06)

(21) Anmeldenummer: **88100725.6**

(22) Anmeldetag: **20.01.88**

(54) **Verfahren zum Nachgerben.**

(30) Priorität: **26.01.87 DE 3702153**

(43) Veröffentlichungstag der Anmeldung:
**17.08.88 Patentblatt 88/33**

(45) Bekanntmachung des Hinweises auf die Patenterteilung:
**07.08.91 Patentblatt 91/32**

(84) Benannte Vertragsstaaten:
**AT BE CH DE ES FR GB GR IT LI NL SE**

(56) Entgegenhaltungen:
**EP-A- 0 077 495**
**EP-A- 0 084 134**
**EP-A- 0 118 023**
**DE-A- 2 127 959**
**DE-B- 1 213 996**

(73) Patentinhaber: **Chemische Fabrik Stockhausen GmbH**
**Bäkerpfad 25**
**W-4150 Krefeld(DE)**

(72) Erfinder: **Kaussen, Manfred, Dr. Dipl.-Chem.**
**Dahlienstrasse 12**
**W-4150 Krefeld(DE)**
Erfinder: **Stockhausen, Dolf, Dr. Dipl.-Kaufm.**
**Brahms-Strasse 104**
**W-4150 Krefeld(DE)**
Erfinder: **Hartan, Hans-Georg, Dr. Dipl.-Chem.**
**Vogelsang 171**
**W-4178 Kevelaer 4(DE)**
Erfinder: **Landscheidt, Alfons, Dr. Dipl.-Chem.**
**Lefarthstrasse 11**
**W-4150 Krefeld(DE)**

(74) Vertreter: **Klöpsch, Gerald, Dr.-Ing. Patentanwälte Klöpsch & Flaccus**
**An Gross St. Martin 6**
**W-5000 Köln 1(DE)**

EP 0 278 267 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zum Nachgerben, mit dem insbesondere die Oberflächeneigenschaften des Leders (Glätte, Glanz), sowie die physikalischen Eigenschaften (elastisches Verhalten) neben dem färberischen Verhalten verbessert werden.

Die Entwicklung bestimmter Ledertypen wird bestimmt durch Modeerwartungen und Anforderungen an die jeweiligen Gebrauchseigenschaften. Die das modische Erscheinungsbild prägenden Faktoren sind der visuelle Eindruck der Oberfläche sowie der Ledercharakter, der als organoleptisches Verhalten bezeichnet wird. Dagegen werden die Eigenschaften oder der Gebrauchswert hauptsächlich durch das physikalische Verhalten des jeweiligen Leders bestimmt.

Die Bestrebungen nach einem insgesamt höherwertigen Leder-Endprodukt werden insbesondere durch die weltweite Verschlechterung der Rohwarenqualität behindert. Das bedingt, daß Leder mit höherer Losnarbigkeit gefertigt werden sowie stärkere Zurichtungen verwendet werden, um das ungünstige Erscheinungsbild zu maskieren. Eine intensive, dicke Zurichtung unterdrückt jedoch den hochwertigen, schönen ursprünglichen Charakter des Leders. Deshalb sind jene Verfahren von besonderem Interesse, die es gestatten, ohne Mitverwendung größerer Mengen z.B. an Pigment die Oberflächenerscheinung und das organoleptische Verhalten zu verbessern.

Derjenige Schritt im Rahmen der Lederherstellung, der sich zur Erzielung und/oder Beeinflussung in die gewünschte Richtung am meisten anbietet, stellt die Nachgerbung dar, sofern Sie nicht in Ihrem ursprünglichen Sinne, nämlich einer Erhöhung der Schrumpfungstemperatur des Leders, verstanden wird. Als typische Nachgerbstoffe finden Syntane - wasser-lösliche Kondensationsprodukte aus aromatischen Sulfonsäuren und Formaldehyd - oder wasserlösliche Polymere auf Basis von Acrylsäure und anderen ungesättigten polymerisierbaren Carbonsäuren Anwendung. Der anionische Ladungscharakter führt jedoch zu einer mehr oder weniger stark ausgeprägten Farbaufhellung, welche unerwünscht ist. Dieser Nachteil läßt sich dadurch beheben, daß in den Syntanen aromatische Amine mitverwendet werden oder polyampholythische Harze eingesetzt werden.

In der DE-OS 21 27 959 werden polyampholytische Harze mit einem Verhältnis von Carboxyl- zu Aminogruppen von 97,5:2,5 bis 35:45 zur Verbesserung der färberischen Eigenschaften und der Bruchfestigkeit des Leders beschrieben. Die Aminogruppen stammen aus basischen Estern, insbesondere aus dem als Comonomeren verwendeten Dimethylaminoethylmethacrylat. Solche basischen Ester haben jedoch den Nachteil der Hydrolyseempfindlichkeit.

In der EP 0084134 werden Terpolymere, und zwar auf Basis Acrylsäure oder Methacrylsäure, N-(3-Dimethyl-aminopropyl)-Methacrylamid und Acrylnitril und/oder Acrylamid, als Nachgerbstoffe beschrieben. Hierdurch soll ebenfalls das färberische Verhalten verbessert sowie gute Fülle erzielt werden. In der EP-A-0 077 495 werden Polymergerbstoffe aus (Meth)Acrylamid- und N-3(3-Dimethylaminopropyl) - methacrylamid - Einheiten beschrieben, die Acrylsäure - oder Methacrylsäure - Einheiten enthalten können.

Aufgabe der vorliegenden Erfindung ist es deshalb, Lederhilfsmittel bereitzustellen, die neben der Verbesserung des färberischen Verhaltens in erster Linie das organoleptische Verhalten (Oberflächenaussehen, insbesondere hinsichtlich Glanz und Glätte) und die physikalischen Eigenschaften verbessern.

Diese Aufgabe wird erfindungsgemäß durch die kennzeichnenden Merkmale des Patentanspruchs 1 gelöst. In letzterem schließt der Begriff "Copolymerisat" ein Terpolymerisat aus.

Überraschenderweise hat es sich gezeigt, daß durch Einsatz von Copolymerisaten aus basischen Acrylamidderivaten und Acrylsäure oder Methacrylsäure Eigenschaften wie Glanz, Glätte, Egalität und Ruhe, biegeelastisches Verhalten, sowie Feinkorn auf der Oberfläche erzielt werden können. Als besonders vorteilhaft erweist sich dabei, daß auf das Acrylnitril, welches wegen seiner Toxizität bedenklich ist, bei den erfindungsgemäß eingesetzten Copolymerisaten verzichtet werden kann.

Die erfindungsgemäß verwendeten Copolymerisate sind amphotere, wasserlösliche Produkte, die neben Acrylsäure oder Methacrylsäure ein basisches Acrylamidmonomer b) einpolymerisiert enthalten.

Bevorzugt weisen die erfindungsgemäß eingesetzten Copolymerisate ein Molekulargewicht von 500 bis 50 000 auf. Das Molekulargewicht wurde nach der Methode der Gelpermeationschromatographie bestimmt.

Die erfindungsgemäß eingesetzten Copolymerisate werden in Form ihrer wäßrigen Lösungen verwendet. Bevorzugt werden die in Form ihrer wäßrigen Lösungen anfallenden Copolymerisate, deren Konzentration an Copolymerisat (gleich wirksame Substanz) herstellungsbedingt zwischen 20 und 50 Gew.-% liegt, auf die erforderliche Gebrauchskonzentration verdünnt. Die erfindungsgemäß verwendeten Copolymerisate sind bereits in sehr geringen Konzentrationen wirksam. Geeignete Konzentrationen lassen sich in Abhängigkeit vom Ledertyp und den gewünschten Eigenschaften auf einfache Weise ermitteln. Die Konzentration der wäßrigen Copolymerisatlösung kann innerhalb weiter Bereiche (0,02 bis 10 Gew.-% Copolymerisat) bezogen auf das Lederfalzgewicht variieren. Bevorzugt werden Konzentrationen von 0,1 bis 7,5 %, wobei für die meisten praktischen Zwecke Konzentrationen von 0,4 bis 5 Gew.-% zur Erzielung guter Ledereigenschaften ausreichen.

Die Copolymerisatzusammensetzung kann innerhalb der im Anspruch 1 angebenen Bereiche variieren, wobei sich als besonders gut geeignet Copolymerisate mit 80 bis 40 Gew.-% Acrylsäure oder Methacrylsäure und 20 bis 60 Gew.-% basischem Acrylamidmonomeren b) erwiesen haben.

Als Monomer b) werden N-alkylsubstituierte Acrylamide oder Methacrylamide bevorzugt, die am Alkylrest eine tertiäre Aminogruppe tragen. Beispielhaft seien genannt Dimethylaminopropylacrylamid, Dimethylaminopropylmethacrylamid, Dimethylamino-2,2-dimethylpropylacrylamid, Dimethylamino-2,2-dimethylpropylmethacrylamid und Diethylaminopropylacrylamid.
Im Comonomeren b) ist der Aminstickstoff gegebenenfalls neutralisiert oder quaterniert.

Die erfindungsgemäßen Lederhilfsmittel können nach an sich bekannten Polymerisationsmethoden erhalten werden.
Vorzugsweise wird die Plymersation der Monomeren in wässriger Lösung oder in Gemischen aus Wasser und Alkohol, z.B. Isopropanol, durchgeführt. Die Initiierung der Polymerisation erfolgt mit Hilfe von radikalen Polymerisationskatalysatoren. Verwendet werden können Redoxsysteme und/oder thermisch zerfallende Radikalbildner vom Typ der Azoverbindungen wie z.B. Azoisobuttersäurenitril. Als Redoxsysteme eignen sich z.B. Kombinationen aus Wasserstoffperoxid, Salzen der Peroxydischwefelsäure oder tert. Butylhydroperoxid mit Natriumsulfit oder Natriumdithionit als Reduktionskomponente.

Zur Erzielung der erfindungsgemäßen Molekulargewichte unter 100 000 ist es sinnvoll, die Polymerisation in Gegenwart von Polymerisationsreglern durchzuführen. Dies können niedrige Alkohole mit 1 bis 4 Kohlenstoffatomen sein, vorzugsweise Isopropanol. Als Regler wirksam sind weiterhin Hydroxylammoniumsalze sowie Mercaptane, z.B. Mercaptoethanol oder Thioglykolsäure.

Die Copolymerisation kann so durchgeführt werden, daß man einen Teil des Monomerengemisches vorlegt, die Copolymerisation startet und dann die Monomerenmischung stetig zudosiert. Die Temperatur bei der Copolymerisation kann in einem weiten Bereich schwanken. Je nach verwendeten Katalysatoren können Temperaturen zwischen 50 °C und 200 °C optimal sein. Möglich ist es, die Polymerisation am Siedepunkt des Lösungsmittels oder unter Druck bei darüberliegenden Temperaturen durchzuführen.

Oft kann es vorteilhaft sein, die Polymerisation unter adiabatischen Bedingungen durchzuführen. Der Polymerisationsstart erfolgt dann zweckmäßig bei niedrigen Temperaturen, z.B. bei 20 °C. Die durch die freiwerdende Polymerisationswärme erreichte Endtemperatur hängt von den eingesetzten Monomeren und Konzentrationsverhältnissen ab und kann bei einem entsprechenden Druck z.B. bis 180 °C betragen.

Der pH-Wert während der Copolymerisation kann in einem weiten Bereich schwanken. Vorteilhaft wird die Copolymerisation bei niedrigen pH-Werten durchgeführt, möglich sind jedoch auch pH-Werte über dem Neutralpunkt.
Nach der Polymerisation wird mit einer wäßrigen Base, z.B. Natronlauge, Ammoniak oder Kalilauge ein pH-Wert im Bereich von 5 bis 12, vorzugsweise 7 bis 8, eingestellt.

Die Herstellung der erfindungsgemäß verwendeten Copolymerisate und ihre ledertechnische Anwendung wird durch die nachfolgenden Beispiele erläutert; Teile sind Gewichtsteile.

## Beispiel 1

### Herstellung des Copolymerisats

#### Copolymerisat 1:

In eine Mischung aus 675 Teilen Wasser, 38 Teilen 37 %ige Salzsäure und 225 Teilen Acrylsäure werden unter Rühren und Kühlen 62 Teile Dimethylaminopropylacrylamid eingetragen. Es stellt sich ein pH-Wert von 1,6 ein. Die Temperatur beträgt 20 °C. Nun werden nacheinander 42 Teile 35 %iges Wasserstoffperoxid, 36 Teile Mercaptoethanol und 2 Teile 1%ige Eisen-(II)-sulfatlösung in die Monomerenlösung eingerührt und dann der Rührer abgestellt. Die sofort beginnende Polymerisation macht sich in einem Temperaturanstieg bemerkbar. Nach ca. 2 Minuten wird die Endtemperatur von 95 °C erreicht. Nun werden 4,5 Teile 35 %iges Wasserstoffperoxid und 2 Teile 40 %ige wässrige Hydroxylaminhydrochloridlösung eingerührt. Man läßt eine Stunde nachreagieren und durch Zugabe von 269 Teilen 45 %ige Natronlauge stellt sich ein pH-Wert von 8,0 ein.

Die Viskosität des Produkts beträgt 30 mPa.s. Die Molekulargewichtsbestimmung mittels Gelpermeationschromatographie (GPC) ergab einen Wert von 920. Das Produkt hat 27,3 % Aktivsubstanz (wS).

Ledertechnische Anwendung

Die erhaltene Lösung wurde gemäß nachfolgender Rezeptur eingesetzt:

Kleintierfelle

Typ : Schafnappa
wet blue, Neuseeländer
%-Angaben bezogen auf Abwelkgewicht

Waschen

300 % Wasser 35 °C
0,2 % Ameisensäure (1:5 mit Wasser verdünnt)
1 % Entfettungsmittel auf Basis nichtionogener Emulgatoren und chlorierter Kohlenwasserstoffe 30 min,

Flotte ablassen

spülen Wasser 40 °C 5 min,

Nachgerbung

150 % Wasser 40 °C
5 % Mineralgerbstoff mit ca. 13 % $Cr_2O_3$ -Gehalt ungelöst 45 min,

2 % lichtechter, anionischer Neutralisationsgerbstoff ungelöst 45 min,

pH 4,0

Flotte ablassen

spülen Wasser 40 °C 5 min,

Neutralisation/Nachgerbung

150 % Wasser 40°C
2 % lichtechter, anionischer

Neutralisationsgerbstoff ungelöst 30 Min.

pH 5,4
Lederquerschnitt gegen Bromkresol-
grün: grün-blau

| | | | |
|---|---|---|---|
| 3 % | Voll- und Austauschgerbstoff } ungelöst | | |
| 3 % | anionischer Harzgerbstoff } | | |
| 6,7 % | erfindungsgemäßes Copolymer gemäß Beispiel 1 | 1:3 | 45 Min. |
| 0,7 % | Ameisensäure | 1:5 | 30 Min. |
| | pH 3,7 - 4,0 | | |

Flotte ablassen

spülen Wasser 50°C 5 Min.

Färbung/Fettung

| | | | |
|---|---|---|---|
| 150 % | Wasser | 50 °C | |
| 0,8 % | Ammoniak 1:5 | | 10 Min. |
| + 2 % | schwachsaures Färbereihilfsmittel | ungelöst | 10 Min. |
| + 4 % | Baygenalbraun CN*), | ungelöst | 30 Min. |
| | Lederquerschnitt durchgefärbt | | |

* Produkt der BAYER AG, Leverkusen

+ 4 % Fettungsmittel auf Basis sulfonierter natürlicher und synthetischer Fettstoffe
+ 4 % synthetisches Fettungsmittel } 1:4 45 min
+1,5% Ameisensäure 1:5
2 x nach 5 Minuten und einmal nach 30 min
pH 3,4

Flotte ablassen

spülen Wasser 20°C 10 min

Leder über Nacht auf Bock
abwelken
ausrecken
hängend trocknen
anfeuchten
stollen
trockenfalzen
millen
spannen

Das mit dem erfindungsgemäßen Copolymer behandelte Nappaleder zeigte einen deutlich ausgeprägten Glanz und eine glatte Oberfläche mit ruhigem, feinem Narbenbruch. Die Doppelhäutigkeit wurde unterdrückt. Das elastische Dehnungsverhalten war stark ausgeprägt.

Beispiel 2

Copolymerisat 2:

Herstellung des Copolymerisats:

In eine Mischung aus 621 Teilen Wasser, 45 Teilen 37 %ige Salzsäure und 263 Teilen Acrylsäure werden unter Kühlen 72 Teile Dimethylaminopropylacrylamid eingetragen. Es stellt sich ein pH-Wert von 1,6 ein. Die Temperatur beträgt 20 °C. Nun werden nacheinander 3 Teile 35 %iges Wasserstoffperoxid, 1 Teil Mercaptoethanol und 0,5 Teile 1 % ige Eisen-(II)-sulfatlösung in die Monomerenlösung eingerührt und dann der Rührer abgestellt. Die sofort beginnende Polymerisation macht sich in einem Temperaturanstieg bemerkbar. Nach ca. 8 Minuten wird die Endtemperatur von 95 °C erreicht. Nun werden 4,5 Teile 35 % iges Wasserstoffperoxid und 2 Teile 40 %ige wässrige Hydroxylaminhydrochloridlösung eingerührt. Man läßt eine Stunde nachreagieren und stellt durch Zugabe von 309 Teilen 45 %ige Natronlauge einen pH-Wert von 8,0 ein. Die Viskosität des Produktes beträgt 9500 mPa.s. Die Molekulargewichtsbestimmung ergab einen Wert von 4400. Die Aktivsubstanz (wS) wurde zu 32,7 % bestimmt.

Ledertechnische Anwendung

Das so gewonnene Copolymerisat wurde in nachfolgender Rezeptur zur Prüfung seiner anwendungstechnischen Wirkung eingesetzt:

Rindleder

Typ : Nachgegerbte Oberleder,
wet blue, Falzstärke 2,0 mm, Ts: 100 °C
%-Angaben bezogen auf Falzgewicht

Waschen

| | | | |
|---|---|---|---|
| 300 % | Wasser | 35 °C | |
| 0,3 % | Ameisensäure | 1:5 | 15 min |
| | pH 3,7 | | |

Flotte ablassen

Neutralisation/Nachgerbung

| | | | |
|---|---|---|---|
| 100 % | Wasser | 35 °C | |
| 1 % | Natriumformiat | ungelöst | 45 min |
| 2 % | Neutralisations- und Nachgerbstoff | | |
| | pH 5,7 | | |
| | Lederquerschnitt gegen Bromkresolgrün: blau | | |
| 4 % | erfindungsgemäßes Copolymer | 1:3 | 45 min |

Flotte ablassen

Waschen

| | | | |
|---|---|---|---|
| 300 % | Wasser | 50 °C | 10 min |

Flotte ablassen

Färbung/Fettung

| | | | |
|---|---|---|---|
| 100 % Wasser 50 °C | | | |
| 1 % Baygenalbraun L-N5G*) | | 1:20 | 20 min |
| + 6 % Fettungsmittel auf Basis sulfonierter natürlicher und synthetischer Fettstoffe | } | 1:4 | 45 min |
| + 2 % synthetisches Fettungsmittel | } | | |
| + 1 % Ameisensäure | | 1:5 | 20 min |
| pH 3,8 | | | |

Flotte ablassen

spülen Wasser 20°C 5 min

Leder über Nacht auf Bock
abwelken
ausrecken
vakuumtrocknen (80°C/2,5 min)
ablüften
anfeuchten
stollen
bügeln (80°C/0,5 min)

Das mit dem erfindungsgemäßen Copolymer behandelte Leder zeichnete sich aus durch ausgeprägten Glanz, gleichmäßige Glätte, feines, ruhiges Narbenbild und sein elastisches Verhalten.

* Produkt der BAYER AG, Leverskusen

Beispiel 3:

In eine Mischung aus 603 Teilen Wasser, 72 Teilen 37 %ige Salzsäure und 210 Teilen Acrylsäure werden unter Kühlen 115 Teile Dimethylaminopropylmethacrylamid eingetragen. Es stellt sich ein pH-Wert von 1,6 ein. Die Temperatur beträgt 20 °C. Nun werden nacheinander 19 Teile 35 %iges Wasserstoffperoxid, 5 Teile Mercaptoethanol und 0,5 Teile 1 %ige Eisen-(II)-sulfatlösung in die Monomerenlösung eingerührt und dann der Rührer abgestellt.

Die sofort beginnende Polymerisation macht sich in einem Temperaturanstieg bemerkbar. Nach ca. 4 Minuten wird die Endtemperatur von 95 °C erreicht. Nun werden 4,5 Teile 35 %iges Wasserstoffperoxid und 2 Teile wässrige 40%ige Hydroxylaminhydrochloridlösung eingerührt. Man läßt eine Stunde nachreagieren und stellt durch Zugabe von 255 Teilen 45 %ige Natronlauge einen pH-Wert von 8,0 ein. Die Viskosität des Produktes beträgt 180 mPa.s. Die Molekulargewichtsbestimmung ergab einen Wert von 6300. Das Produkt hat 32,4 % Aktivsubstanz (wS).

Der Einsatz des Copolymerisats gemäß Beispiel 3 in die Rezeptur aus Beispiel 1 führte zu einem Leder mit hoher Dehnungselastizität bei geringer Losnarbigkeit. Die Oberfläche war seidig im Charakter, die Färbung sehr tief.

Beispiel 4:

In eine Mischung aus 592 Teilen Wasser, 90 Teilen 37 %ige Salzsäure und 175 Teilen Acrylsäure werden unter Kühlen 144 Teile Dimethylamino-2,2-dimethylpropylacrylamid eingetragen. Es stellt sich ein pH-Wert von 1,6 ein. Die Temperatur beträgt 20 °C. Nun werden nacheinander 28 Teile 35 %iges Wasserstoffperoxid, 24 Teile Mercaptoethanol und 1 Teil 1 %ige Eisen-(II)-sulfatlösung in die Monomerenlösung eingerührt und dann der Rührer abgestellt. Die sofort beginnende Polymerisation macht sich in einem Temperaturanstieg bemerkbar. Nach ca. 2 Minuten wird die Endtemperatur von 95 °C erreicht. Nun werden 4,5 Teile 35 %iges Wasserstoffperoxid und 2 Teile 40 %ige wässrige Hydroxylaminhydrochloridlösung eingerührt. Man läßt eine Stunde nachreagieren und stellt durch Zugabe von 216 Teilen 45 %ige Natronlauge einen pH-Wert von 8,0 ein. Die Viskosität des Produktes beträgt 39 mPa.s. Die Molekulargewichtsbestimmung ergab einen Wert von 1800. Die Aktivsubstanz (wS) beträgt 31,4 %.

Das so erhaltene Copolymerisat ergab gemäß Rezeptur des Beispieles 1 ein Leder mit hohem Glanz, angenehmer Glätte und ausgeprägtem elastischem Verhalten.

Beispiel 5:

In eine Mischung aus 580 Teilen Wasser, 107 Teilen 37 %ige Salzsäure und 140 Teilen Methacrylsäure werden unter Kühlen 173 Teile Dimethylaminopropylacrylamid eingetragen. Es stellt sich ein pH-Wert von 1,6 ein. Die Temperatur beträgt 20 °C. Nun werden nacheinander 28 Teile 35 %iges Wasserstoffperoxid, 24 Teile Mercaptoethanol und 1 Teil 1 %ige Eisen-(II)-sulfatlösung in die Monomerenlösung eingerührt und dann der Rührer abgestellt. Die sofort beginnende Polymerisation macht sich in einem Temperaturanstieg bemerkbar. Nach ca. 2 Minuten wird die Endtemperatur von 95 °C erreicht. Nun werden 4,5 Teile 35 %iges Wasserstoffperoxid und 2 Teile 40 %ige wässrige Hydroxylaminhydrochloridlösung eingerührt. Man läßt eine Stunde nachreagieren und stellt durch Zugabe von 174 Teilen 45 %ige Natronlauge einen pH-Wert von 8,0 ein. Die Viskosität des Produktes beträgt 105 mPa.s. Die Molekulargewichtsbestimmung ergab einen Wert von 3900. Das erhaltene Produkt hat 31,6 % Aktivsubstanz (wS).

Das Copolymerisat führte, in der Rezeptur nach Beispiel 2 eingesetzt, zu einem Leder mit glatter Oberfläche, einem seidigen Glanz und ruhigem, gleichmäßig feinem Narbenbruch. Das Leder zeigte ein ausgeprägtes Dehnungs- und Rückstellvermögen.

Beispiel 6:

Es wird eine Mischung aus 592 Teilen Wasser, 263 Teilen Acrylsäure und 87,5 Teilen Dimethylaminopropylacrylamid, das mit Methylchlorid quaterniert wurde, eingetragen. Es stellt sich ein pH-Wert von 2,1 ein. Die Temperatur beträgt 20 °C. Nun wird in das Reaktionsgemisch Stickstoff eingeleitet und nacheinander werden 11 Teile 35 %iges Wasserstoffperoxid, 2,5 Teile Mercaptoethanol und 0,5 Teile 1 %ige Eisen-(II)-sulfatlösung eingerührt und dann der Rührer abgestellt. Die sofort beginnende Polymerisation macht sich in einem Temperaturanstieg bemerkbar. Nach ca. 8 Minuten wird die Endtemperatur von 92 °C erreicht. Nun werden 4,5 Teile 35 %iges Wasserstoffperoxid und 2 Teile 40 %ige wässrige Hydroxylaminhydrochloridlösung eingerührt. Man läßt eine Stunde nachreagieren und stellt durch Zugabe von 295 Teilen 45 %ige Natronlauge einen pH-Wert von 8,0 ein. Die Viskosität des Produktes beträgt 360 mPa.s. Die Molekulargewichtsbestimmung ergab einen Wert von 2100.

Das mit diesem Copolymerisat gemäß der Rezeptur in Beispiel 1 behandelte Leder zeichnete sich aus durch guten Glanz und hohe Glätte. Die Doppelhäutigkeit wurde deutlich gemindert. Das Leder war gekennzeichnet durch ausgeprägten Sprung.

**Patentansprüche**

1. Verfahren zur Nachgerbung von Leder durch Behandlung mit einer wäßrigen Lösung eines Copolymerisats bei einer Flottenlänge von 30 bis 300 %, bezogen auf Falzgewicht, pH-Werten im Bereich von 3 bis 6 und Temperaturen im Bereich von 20 bis 70 °C, dadurch gekennzeichnet, daß man ein Copolymerisat aus
   a) 90 bis 20 Gew.-% Acrylsäure oder Methacrylsäure und
   b) 10 bis 80 Gew.-% einer Verbindung der Formel

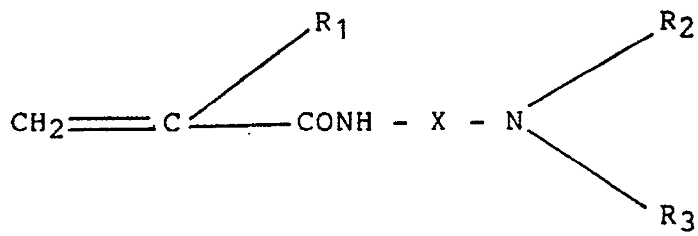

   einsetzt, worin in der Formel $R_1$ Wasserstoff oder den Methylrest, $R_2$ und $R_3$ die gleich oder verschieden sind, den Methyl- oder Ethylrest bedeuten, X für einen gegebenenfalls verzweigten Alkylenrest mit 1 bis 5 C-Atomen steht, der Aminstickstoff gegebenenfalls neutralisiert oder quaterniert ist und das Molekulargewicht des Copolymerisats, gemessen bei einem pH-Wert von 8,0, kleiner als 100 000 ist.

2. Verfahren nach Anspruch 1, dadurch gekennzeichnet, daß man Copolymerisate mit einem Molekulargewicht von 500 bis 50.000 einsetzt.

3. Verfahren nach einem der Ansprüche 1 bis 2, dadurch gekennzeichnet, daß man Copolymerisate aus
   a) 80 bis 40 Gew.-% Acrylsäure oder Methacrylsäure und
   b) 20 bis 60 Gew.-% Comonomer b)
   einsetzt.

4. Verfahren nach einem der Ansprüche 1 bis 3, dadurch gekennzeichnet, daß man Copolymerisate einsetzt, die als Monomer b) Dimethylaminopropylacrylamid oder Dimethylaminopropylmethacrylamid einpolymerisiert enthalten.

5. Verfahren nach einem der Ansprüche 1 bis 3, dadurch gekennzeichnet, daß man Copolymerisate einsetzt, die als Monomer b) Dimethylamino-2,2-dimethylpropylacrylamid oder Dimethylamino-2,2-dimethylpropylmethacrylamid einpolymerisiert enthalten.

6. Verfahren nach einem der Ansprüche 1 bis 5, dadurch gekennzeichnet, daß das Copolymerisat in einer Konzentration der wäßrigen Lösung von 0,02 bis 10 Gew.-%, bezogen auf Falzgewicht des Leders, eingesetzt wird.

7. Verfahren nach einem der Ansprüche 1 bis 6, dadurch gekennzeichnet, daß das Copolymerisat in einer Konzentration von 0,1 bis 7,5 Gew.-%, bezogen auf das Falzgewicht des Leders, eingesetzt wird.

8. Verfahren nach einem der Ansprüche 1 bis 7, dadurch gekennzeichnet, daß das Copolymerisat in einer Konzentration von 0,4 bis 5 Gew.-%, bezogen auf das Falzgewicht des Leders, eingesetzt wird.

9. Nachgegerbte Leder, erhältlich nach einem der Ansprüche 1 bis 8.

10. Copolymerisate aus
    a) 90 bis 20 Gew.-% Acrylsäure oder Methacrylsäure und
    b) 10 bis 80 Gew.-% einer Verbindung der Formel

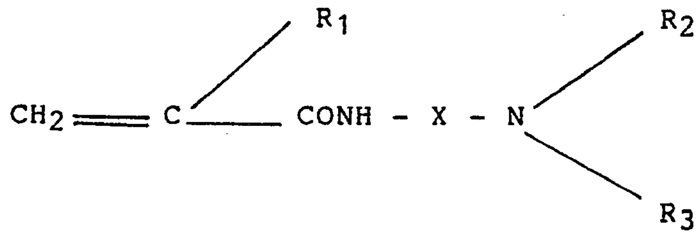

worin in der Formel $R_1$ Wasserstoff oder den Methylrest, $R_2$ und $R_3$, die gleich oder verschieden sind, den Methyl- oder Ethylrest bedeuten, X für einen gegebenenfalls verzweigten Alkylenrest mit 1 bis 5 C-Atomen steht, der Aminstickstoff gegebenenfalls neutralisiert oder quaterniert ist und das Molekulargewicht des Copolymerisats, gemessen bei einem pH-Wert von 8,0, kleiner als 100 000 ist.

## Claims

1. A process for retanning leather by treatment with an aqueous solution of a copolymer at a float length of 30 to 300% relative to the shaved weight, pH values in the range from 3 to 6, and temperatures in the range from 20 to 70 °C, characterized in that one uses a copolymer of
   (a) 90 to 20%-wt acrylic acid or methacrylic acid and
   (b) 10 to 80%-wt of a compound of the formula

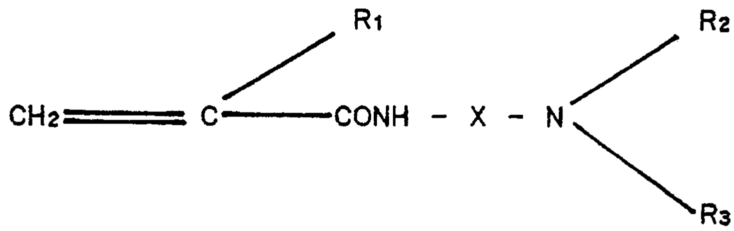

   in which formula $R_1$ is hydrogen or the methyl residue, $R_2$ and $R_3$, which are equal or different, are the methyl or ethyl residue, X is an optionally branched alkylene residue with 1 to 5 carbon atoms, the amine nitrogen is optionally neutralized or quaternized, and the molecular weight of the copolymer, measured at a pH value of 8.0, is less than 100,000.

2. The process according to claim 1, characterized in that one uses copolymers with a molecular weight of 500 to 50,000.

3. The process according to any one of claims 1 to 2, characterized in that one uses copolymers of
   (a) 80 to 40%-wt acrylic acid or methacrylic acid and
   (b) 20 to 60%-wt comonomer (b).

4. The process according to any one of claims 1 to 3, characterized in that one uses copolymers that contain dimethylaminopropyl acrylamide or dimethylaminopropyl methacrylamide incorporated as monomer (b).

5. The process according to any one of claims 1 to 3, characterized in that one uses copolymers that contain dimethylamino-2,2-dimethylpropyl acrylamide or dimethylamino-2,2-dimethylpropyl methacrylamide incorporated as monomer (b).

6. The process according to any one of claims 1 to 5, characterized in that the copolymer is used in a concentration of the aqueous solution of 0.02 to 10%-wt relative to the shaved weight of the leather.

7. The process according to any one of claims 1 to 6, characterized in that the copolymer is used in a

concentration of 0.1 to 7.5%-wt, relative to the shaved weight of the leather.

8. The process according to any one of claims 1 to 7, characterized in that the copolymer is used in a concentration of 0.4 to 5%-wt, relative to the shaved weight of the leather.

9. Retanned leather, obtained as set out in any one of claims 1 to 8.

10. Copolymers of
(a) 90 to 20%-wt acrylic acid or methacrylic acid and
(b) 10 to 80%-wt of a compound of the formula

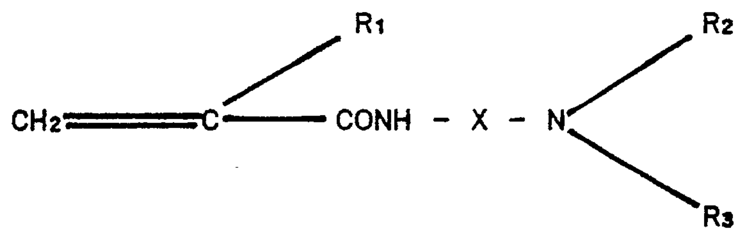

wherein $R_1$ is hydrogen or the methyl residue, $R_2$ and $R_3$, which are the same or different, are the methyl or ethyl residue, X is an optionally branched alkylene residue with 1 to 5 carbon atoms, the amine nitrogen is optionally neutralized or quaternized, and the molecular weight of the copolymer, measured at a pH value of 8.0, is less than 100,000.

**Revendications**

1. Procédé de retannage du cuir par traitement à l'aide d'une solution aqueuse d'un copolymère à une longueur de bain de 30 a 300%, par rapport au poids du cuir dérayé, à des valeurs de pH qui fluctuent de 3 à 6 et des. températures qui varient de 20 à 70° C, caractérisé en ce que l'on met en oeuvre un copolymère constitué de
a) 90 à 20% en poids d'acide acrylique ou d'acide méthacrylique et
b) 10 à 20% en poids d'un composé répondant à la formule

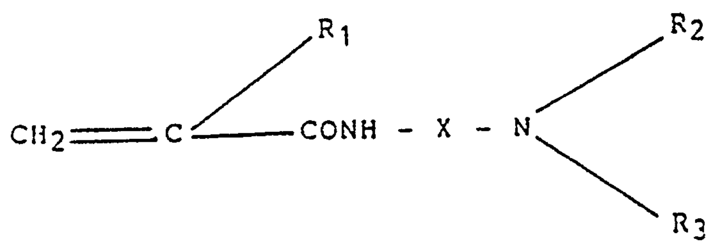

dans laquelle $R_1$ représente un atome d'hydrogène ou le radical méthyle, $R_2$ et $R_3$, qui peuvent être identiques ou différents, représentent le radical méthyle ou éthyle, X représente un groupe alkylène comportant de 1 à 5 atomes de carbone, éventuellement ramifié, l'azote du radical amine est éventuellement neutralisé ou quaternisé et le poids moléculaire du copolymère, mesuré à une valeur de pH de 8,0, est inférieur à 100 000.

2. Procédé suivant la revendication 1, caractérisé en ce que l'on met en oeuvre des copolymères possédant un poids moléculaire de 500 à 50 000.

3. Procédé suivant l'une des revendications 1 et 2, caractérisé en ce que l'on met en oeuvre des copolymères constitués de
a) 80 a 40% en poids d'acide acrylique ou d'acide méthacrylique et
b) 20 à 60% en poids de comonomère b).

4. Procédé suivant l'une des revendications 1 à 3, caractérisé en ce que l'on met en oeuvre des copolymères qui contiennent, à titre de monomère b), du diméthylaminopropylacrylamide ou du diméthylaminopropylméthacrylamide.

5. Procédé suivant l'une des revendications 1 à 3, caractérisé en ce que l'on met en oeuvre des copolymères qui contiennent, à titre de nonomère b), du diméthylamino-2,2-diméthypropylacrylamide ou du diméthylamino-2,2-diméthylpropylméthacrylamide.

6. Procédé suivant l'une des revendications 1 à 5, caractérisé en ce que l'on met en oeuvre le copolymère en une concentration de la solution aqueuse de 0,02 à 10% en poids, par rapport au poids du cuir dérayé.

7. Procédé suivant l'une des revendications 1 à 6, caractérisé en ce que l'on met en oeuvre le copolymère en une concentration de 0,1 a 7,5% en poids, par rapport au poids du cuir dérayé.

8. Procédé suivant l'une des revendications 1 à 7, caractérisé en ce que l'on net en oeuvre le copolymère en une concentration de 0,4 a 5% en poids, par rapport au poids du cuir dérayé.

9. cuir retanné, pouvant être obtenu suivant l'une des revendications 1 à 8.

10. Copolymères constitués de
    a) 90 a 20% en poids d'acide acrylique ou d'acide méthacrylique et
    b) 10 à 80% en poids d'un composé répondant à la formule

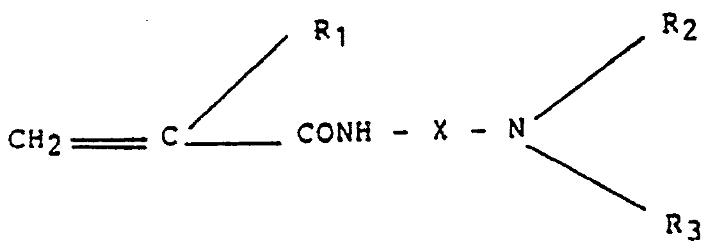

dans laquelle $R_1$ représente un atome d'hydrogéne ou le radical méthyle, $R_2$ et $R_3$, qui peuvent être identiques ou différents, représentent le radical méthyle ou éthyle, X représente un groupe alkylène comportant de 1 à 5 atomes de carbone, éventuellement ramifié, l'azote du radical amine est éventuellement neutralisé ou quaternisé et le poids moléculaire du copolymére, mesuré à une valeur de pH de 8,0, est inférieur à 100 000.